(19) **Europäisches Patentamt European Patent Office Office européen des brevets**

(11) **EP 4 748 536 A2**

(12) **EUROPEAN PATENT APPLICATION**

(43) Date of publication:
27.05.2026 Bulletin 2026/22

(21) Application number: 26172353.0

(22) Date of filing: 08.03.2022

(51) International Patent Classification (IPC):
**B25J 9/06** *(2006.01)*

(52) Cooperative Patent Classification (CPC):
**B25J 9/065; B25J 9/142; B25J 18/02; B25J 18/06;**
F01B 19/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2021 US 202163160281 P**

(62) Document number(s) of the earlier application(s) in accordance with Art. 76 EPC:
**22767758.0 / 4 305 279**

(71) Applicant: **The Regents of the University of California**
**Oakland, CA 94607-5200 (US)**

(72) Inventors:
• **Haggerty, David**
 **Goleta, CA 93117 (US)**
• **Hawkes, Elliot**
 **Goleta, CA 93117 (US)**

(74) Representative: **Taruttis, Stefan Georg**
 **TARUTTIS Patentanwaltskanzlei**
 **Aegidientorplatz 2b**
 **30159 Hannover (DE)**

Remarks:
This application was filed on 14.04.2026 as a divisional application to the application mentioned under INID code 62.

(54) **ACTIVE REELING AND STEERING CONTROL OF AN EVERSION/VINE ROBOT**

(57) A soft vine robot includes a main body configured as a tube inverted back inside itself to define a pressure channel, such that when the channel is pressurized, the main body everts, and inverted material of the main body everts and passes out of a tip at a distal end of the main body. A reeling mechanism is controlled by a reeling motor, the reeling mechanism being within the tube and being configured to actively feed the inverted material to provide or assist eversion and to actively retract extended material of the main body back. Control and communications electronics control the reeling motor. T reeling mechanism can include a steering mechanism with a bending axis controlled by a steering motor. By actively supplying eversion or inversion forces in the robot body, the soft vine robot can grow with reduced pressure compared to base reeled robots.

**EP 4 748 536 A2**

## Description

This invention was made with US government support under grant numbers 1637446 and 1944816 awarded by US National Science Foundation. The US government has certain rights in this invention.

The application claims priority under 35 U.S.C. §119 and all applicable statutes and treaties from prior United States provisional application serial number 63/160,281 which was filed March 12, 2021.

A filed of the invention is everting robots, also referred to as vine robots.

BACKGROUND

Vine robots are formed of soft materials and evert in response to fluid pressure. Specifically, a vine robot extends from its tip by everting or unfurling new material, driven by internal body pressure. See, e.g. Hawkes et al., US Patent 10,954,789. Vine robots typically store new body material in a reel at their base, which material is unreeled as the robot is extended and everts in response to fluid pressure passing it through the core of the robot to the tip. Made of a thin-walled membrane inverted inside itself, these robots "grow" when inflated, passing new material through the body to emerge at the tip to achieve extension. Their bodies do not move relative to their surroundings. Some vine robots achieve active steering by selectively lengthening or shortening one side of the body being extended. While this approach to steering and material storage lends itself to a fully soft device, it has three key limitations: (i) internal friction of material passing through the core of the robot limits its length in tortuous paths, (ii) body buckling as the robot's body material is re-spooled at the base can prevent retraction, and (iii) constant curvature steering limits the robot's poses and object approach angles in a given workspace.

Several designs have been proposed to overcome the constant curvature steering limits. One design is based upon tendon actuation coupled with pneumatic shape locking. S. Wang, R. Zhang, D. A. Haggerty, N. D. Naclerio, and E. W. Hawkes, "A dexterous tip-extending robot with variable-length shape-locking," in 2020 IEEE International Conference on Robotics and Automation (ICRA). IEEE, 2020, pp. 9035-9041. Another design used discrete, reversible body stiffness modulation. B. H. Do, V. Banashek, and A. M. Okamura, "Dynamically reconfigurable discrete distributed stiffness for inflated beam robots," in 2020 IEEE International Conference on Robotics and Automation (ICRA). IEEE, 2020, pp. 9050-9056. An additional design used mechanical interlocks. W. Hawkes, L. H. Blumenschein, J. D. Greer, and A. M. Okamura, "A soft robot that navigates its environment through growth," Science Robotics, vol. 2, no. 8, p. eaan3028, 2017. Another used active and programmable heat sealing. Y. Satake, A. Takanishi, and H. Ishii, "Novel growing robot with inflatable structure and heat-welding rotation mechanism," IEEE/ASME Transactions on Mechatronics, vol. 25, no. 4, pp. 1869-1877, 2020. These designs fail to provide flexible active control of growth direction and/or materially alter the nature of vine robot growth.

SUMMARY OF THE INVENTION

A preferred embodiment provides a soft vine robot. The robot includes a main body configured as a tube inverted back inside itself to define a pressure channel, such that when the channel is pressurized, the main body everts, and inverted material of the main body everts and passes out of a tip at a distal end of the main body. A reeling mechanism is controlled by a reeling motor, the reeling mechanism being within the tube and being configured to actively feed the inverted material to provide or assist eversion and to actively retract extended material of the main body back. Control and communications electronics control the reeling motor. In a preferred embodiment, the reeling mechanism includes a steering mechanism with a bending axis controlled by a steering motor.

A method for controlling eversion and inversion of a soft vine robot includes pressuring a channel of a main body configured as a tube inverted back inside itself. The method includes actively supplying eversion or inversion forces to the main body via rollers or a spool activated by a reeling motor contained within the channel. Channel pressure and eversion or inversion forces are balanced with a pressure controller and the reeling motor. In a preferred embodiment, the main body is steerd by pending a pivot structure within the main body with a steering motor within the main body.

The soft vine robot of the invention comprises a main body configured as a tube inverted back inside itself to define a pressure channel, such that when the channel is pressurized, the main body everts, and inverted material of the main body everts and passes out of a tip at a distal end of the main body; a reeling mechanism controlled by a reeling motor, the reeling mechanism being within the tube and being configured to actively feed the inverted material to provide or assist eversion and to actively retract extended material of the main body back; and control and communications electronics to control the reeling motor.

In the soft vine robot the reeling mechanism preferably comprises storage configured to store the inverted material. Preferably, the soft vine robot comprises a controlled pressure source to pressurize the pressure channel. Preferably, the reeling mechanism has a cylindrical proximal housing for the control and communications electronics. Preferably, the reeling mechanism comprises a set of rollers driving by the reeling motor, the rollers being engaged with inverted body passing between the rollers. Preferably, the soft vine robot comprises a central opening at a distal end of the reeling mechanism that receives the inverted body into the rollers. Preferably, the reeling mechanism comprises a steering mechanism with a bending axis controlled by a steering motor. Preferably, the reeling mechanism comprises a proximal base frame that extends from the cylindrical proximal electronics housing. Preferably, the reeling mechanism comprises a distal motor support frame pivotally connected to the proximal base frame via an axis pin, and wherein the steering motor and reeling motor are mounted on the base frame. Further, the distal motor support frame can comprise a reeling spool driven by the reeling motor around which the inverted body spools. Optionally, the soft vine robot comprises a spacing around the reeling spool to accommodate the body when it is fully inverted and stored on the reeling spool. Optionally, the soft vine robot comprises a distal cylindrical tip at the end of the distal motor support frame, the distal cylindrical tip comprising a central opening to receive inverted material onto the reeling spool. Optionally, the soft vine robot comprises a plurality of steering and/or reeling mechanisms. Optionally, the soft vine robot comprises a camera at a distal tip of the robot. A method for controlling eversion and inversion of a soft vine robot comprises pressuring a channel of a main body configured as a tube inverted back inside itself; actively supplying eversion or inversion forces to the main body via rollers or a spool activated by a reeling motor contained within the channel; and balancing channel pressure and eversion or inversion forces with a pressure controller and the reeling motor. Preferably, the method further comprises steering the main body by pending a pivot structure within the main body with a steering motor within the main body. Preferably, the method further comprises extend the tip of the main body vie everting the main body from force supplied by the rollers or the spool with low pressure i.e., pressure insufficient to itself cause extension/eversion.

## BRIEF DESCRIPTION OF THE DRAWINGS

FIGs. 1A-1C illustrate a preferred steering and reeling device and soft vine robot;
FIGs. 2A-2G illustrate operation of the FIGs. 1A-1C robot;
FIG. 3 illustrates a preferred vine robot with multiple steering and reeling devices;
FIG. 4 illustrates a preferred active reeling device and soft vine robot;
FIG. 5 illustrates a preferred soft vine robot with an active reeling device and a camera; and
FIG. 6 is data comparing a present active reeling device robot to a conventional base reeling soft vine robot in terms of required pressures to grow as a function of path angle of growth.

## DESCRIPTION OF THE PREFERRED EMBODIMENTS

Preferred embodiments provide a vine robotic device with point deformation through a bending motor on the device that provides for steering and reeling. Instead of reeling from the base like prior vine robots, a preferred vine robot can reel from the tip using an onboard reeling motor. An active reeling mechanism (ARM) or steering-reeling mechanism (SRM) allows the device to "drive" along the tail of the robot, which controls the length, and to actuate the robot in that position along the tail, which controls direction. Preferred vine robots provide more control over steering and reeling and therefore provide better access to a given workspace, retraction at any length, and elimination of tail friction limitations, which allow preferred vine robots to navigate more tortuous paths. These features provide an advance in vine robot technology that enhances exploration capabilities in many different environments, and particularly in applications such as search and rescue where rubble can provide a very tortuous and difficult path to explore.

A hybrid soft-rigid vine robot of a preferred embodiment includes a soft vine robot body and a rigid, mobile, internal ARM or SRM. The ARM or SRM is equipped with material storage or material passage to another ARM or SRM device. An SRM device includes a bending actuator for steering by bending via a pivot axis between ends of the SRM, and is can acuate the robot at any point along its length. This hybrid configuration increases reach along tortuous paths, allows retraction, and increases the workspace. The robot remains soft at all points except for the location of the SRM. A hybrid vine robot of the invention can include multiple SRM devices that can create a complex turn pattern over the length of the robot. Multiple SRM devices also allow turns along multiple radial directions/along different planes.

Preferred robots can also reduce the amount of pressure required for growth. The ARM or SRM can provide force to help evert and grow the robot. This is advantageous, particularly if the environment, such as a body lumen, is sensitive to pressure. Vine robots experience increased frictional forces as they evert and grow, which is overcome with fluid pressure in conventional vine robots. The ARM or SRM provides eversion assistance forces and therefore reduce the amount of fluid pressure needed for eversion or continued eversion. The ARM or SRM can assist in retracting the robot via re-inversion of material. In addition, the ARM or SRM can provide for a range of eversion and inversion that is accomplished solely or primarily from forces supplied by the ARM or SRM.

Preferred embodiment ARM and SRM equipped vine robots can provide greater lengths when growing through tortuous paths-as a total angle of path is no longer bounded due to tail friction, and instead by the length of the robot itself.

Retraction remains possible regardless of length-the robot can retract at any length when the ARM or SRM is moved to the tip. A larger workspace is provided by SRM equipped robots - orientation at a given point grows from a single angle for previous designs to a continuous range. In principle, the bend about an axis in either direction can be up to 180 degrees. A practical example is up to 115 degrees. If rotation is provided in the ARM or SRM, then the bend can be in any direction. ARM and SRM equipped vine robots can also extend further than prior vine robots, especially in pressure sensitive workspace.

Preferred embodiments include a vine robot with an ARM. The ARM includes a distal side opening for accepting the vine robot material and a proximal side material storage container, such as a bag. An active reeling mechanism can draw material to evert the robot as the ARM advances with the distal tip of the vine robot as eversion continues. The ARM assists with retraction via opposite actuation of the reeling mechanism. This vine robot is especially useful in defined tortuous paths, such as body lumens. The vine robot can evert with pressures that are low enough to be safe for use in body lumens.

Preferred embodiments of the invention will now be discussed with respect to experiments and drawings. Broader aspects of the invention will be understood by artisans in view of the general knowledge in the art and the description of the experiments that follows.

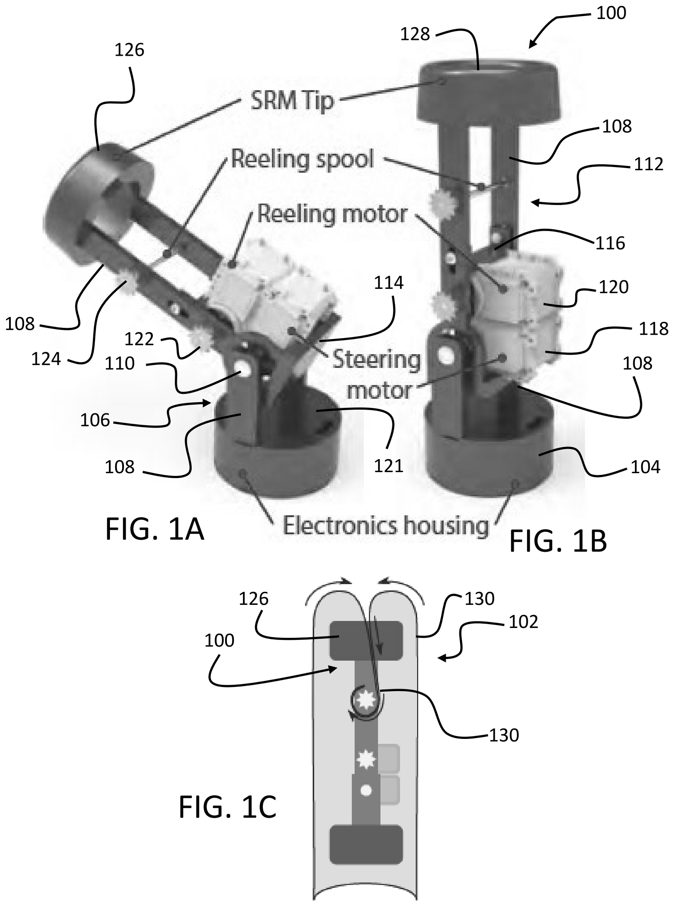

FIGs. 1A and 1B illustrate a preferred SRM 100 in bent and straight form, and FIG. 1C shows the SRM 100 in a vine robot 102. The SRM 100 includes a cylindrical proximal electronics housing 104. Electronics housed therein include motor controllers and wireless communications, e.g., Bluetooth, for conducting SRM control. Wired connection is less favored but can be used with extending from the housing 104 through the robot lumen to a proximal end of the robot to connect to a robot controller. A proximal base frame 106 has two opposing posts 108 and extends from the electronics housing 104. The posts 108 provide a pivot connection through a pivot pin 110 to a distal motor support frame 112, which also includes two posts 108. The motor support frame 112 includes motor support portions, such as base 114 and bar 116 between which a steering motor 118 and a reeling motor 120 are mounted. The steering motor 118 and reeling motor can be connected to the electronics housing with wires through the posts 108, for example. The upper surface of the housing 104 can include a turntable 121, driven by a motor in the housing 104 to rotate the base 114. The motors 118 and 120 include internal battery power sources. Mounting of the steering motor can also include a pass through for the pivot pin 110. The reeling motor 120 drives a gear 122 and can be mounted on the bar 116. When the gear 122 is driven it rotates a reeling spool 124 through a belt or chain (not show in FIGs. 1A-1C). The motor support frame 112 terminates in a distal cylindrical tip 126 with a central opening 128. With reference to FIG. 1C, the opening 128 allows reeling and unreeling of vine robot material onto and off the reeling spool 124 through the opening 128. The reeling spool 124 is spaced apart from the from the bar 116 and tip 126 to permit a substantial quantity of vine robot material 130 to be stored on the reeling spool 124, preferably the full amount of vine robot material necessary for the robot's completely inverted and retracted state. The spacing of the reeling spool generally depends on a maximum radius of retracted material, which is a function of pack efficiency, spool diameter, and vine body thickness.

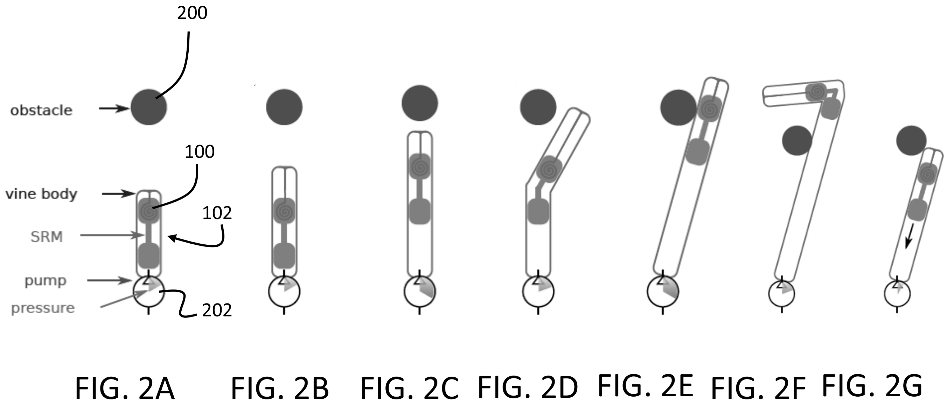

FIGs. 2A-2G illustrate a preferred method for extension and retraction of the vine robot 102 around an obstacle 200. In FIGs. 2A-2B, the SRM 100 extends the tip of the robot 102 by unreeling new body material 130 while the internal pressure from a pressure source 202 is low, i.e., insufficient to itself cause extension/eversion. Further extension in FIG. 2C occurs by increasing pressure, which moves the SRM 102 forward to a desired point, with the reeling motor 120 holding the reeling spool in a stationary position while robot internal body pressure is increased so that the friction between the SRM 102 and the robot body material 130 is overcome, which allows the everting body to pull the SRM towards the tip of the robot. In FIG. 2D, the steering motor 120 then activates to bend the SRM 100 by pivoting the motor support frame 112 with respect to the base frame 106 about the pivot pin 110 to steer around the obstacle 200. The SRM 100 straightens and then unreels more material in FIG. 2E via the reeling motor 120 and/or extends via pressure. FIG. 2F shows the SRM 100 creating a second turn, and FIG. 2G shows retraction via an opposite series of operations, i.e. the SRM 100 straightening and/or pivoting as needed and re-reeling.

The SRM 100 is designed to fit inside the vine robot body with its outside diameter having sufficient radial clearance to easily allow for sliding and for air to inflate the entire vine robot 102. In example embodiments the steering motor 118 control up to 120° in both directions about the pivot pin 110 from the nominal, straight state. This allows point deflections at any point along the robot 102, creating two arbitrary length segments provided the overall body length constraints are satisfied.

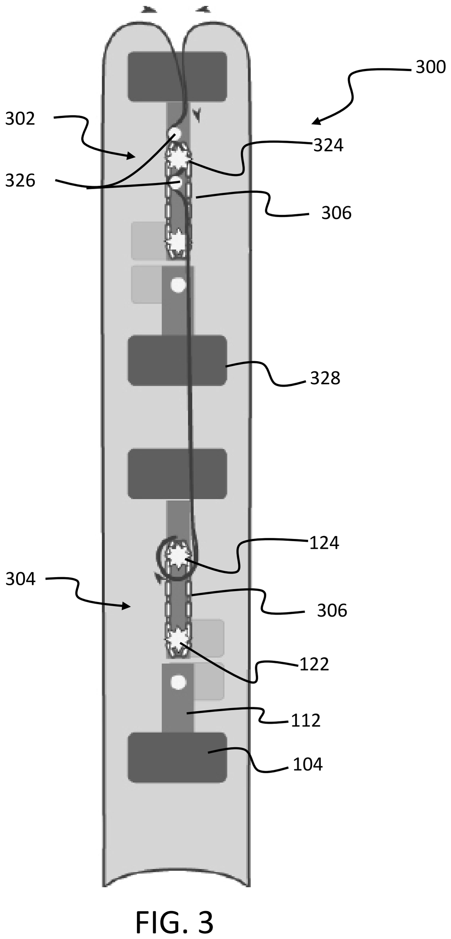

FIG. 3 shows a vine robot 300 with multiple ARM or SRM devices 302 and 304. The bottom device 304 can be an SRM in accordance with FIGs. 1A and 1B, and some components are labelled as in FIGs. 1A and 1B. Additionally, a drive belt 306 is illustrated between the drive gear 122 and the reeling spool 124. In the top device 302 the reeling spool 124 is replaced with a roller drive gear 324 that drives a roller pair 326 to retract (invert) or extend (evert) the robot body material 130. The material is passed through a modified housing 328 that has a through channel to pass body material to and from the second device 304. The second device can otherwise include all other components of the devices 304 and 100.

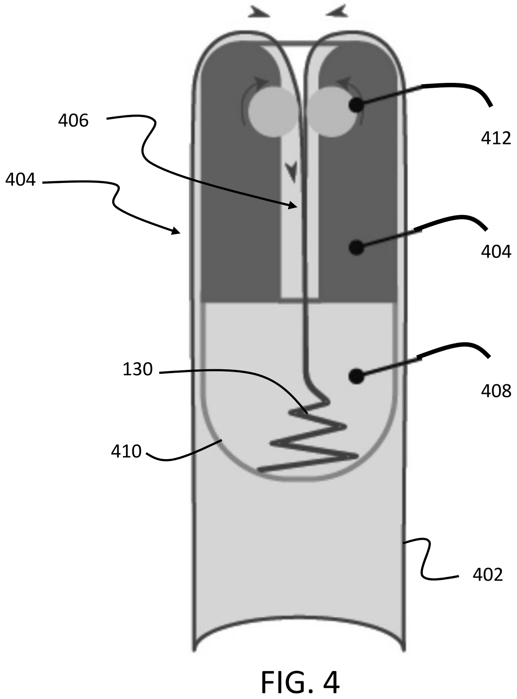

FIG. 4 shows a preferred ARM device 400 for a vine robot 402. A drive motor 404 with control and communications includes a central channel 406 through which robot body material 130 can be guided in and out of a storage volume 408 created by a pouch 410. This pouch can be omitted when the robot 402 is a distal robot and addition robots are proximal to accept the body material 130 in the fashion illustrated with the robots 302 and 304. The drive motor 404 drives a roller pair that pinch the robot body material and retract (invert) or extend (evert) the robot 402.

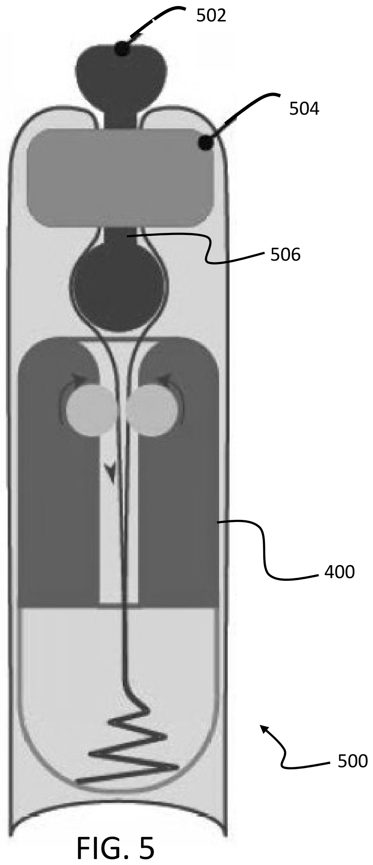

FIG. 5 shows a vine robot 500 with a camera 502 and ARM device 400 according to FIG. 4. The camera 502 can be a standard wireless camera and is mounted through a toroidal mount 504 having a central opening for a narrow part of a camera housing 506. Distal and proximal portions of the housing 506 are too large to pass through the mount 504, which allows the camera 502 to move with a tip of the robot 500.

Experiments and Simulations

Length Limitations.

SRM and ARM vine robots provide advantages regarding length compared to conventional vine robots. The length of a vine robot is limited by the length of the body material on its spool and internal friction. Robots that store body material on a reel at their base pull new material through their body to extend. In straight growth, friction is relatively low, however it increases exponentially with total curvature. This friction, known as capstan friction $F_{int}$, is:

$$F_{int} = \sum_i C e^{\mu_c \theta_i} \qquad (1)$$

where $C$ is a configuration tension, $\mu_c$ is the coefficient of friction in curved growth, and $\theta_i$ is the angle of the $i^{th}$ bend. Due to is exponential nature, this friction is very limiting in tortuous paths. The SRM and ARM circumvent this limit by spooling body material at the tip, and therefore are instead bounded by the amount of material that can be fit on the SRM or stored by the ARM for a given robot diameter.

For the ARM, this is limited by the size of the receptacle and folds of material therein. For the SRM, to understand this volume limitation, we model the spooled tail as a simple Archimedes spiral with a constant rate of radial expansion, described by

$$r = \alpha a + b \qquad (2)$$

where $r$ is the distance from the center of the spiral to its outermost edge, $\alpha$ is the total swept angle of the spiral, which is a constant such that $2\pi a$ is the separation between two layers of the spiral (i.e. folded tail material thickness), and $b$ is the spiral offset (i.e. the radius of the spooling bar). To understand the limits on robot length, $L$, we solve for the arc length of the spiral in terms of $r$ and the parameters $a$ and $b$, denoted $a(r)$, with:

$$L = \int_b^{r_{max}} \sqrt{(\alpha(r))^2 + (\frac{d\alpha}{d_r})^2} dr \qquad (3)$$

Using the substitution $u = r-b$, this integral is solved for the maximum length of the robot, $L_{max}$, as:

$$L_{max} \frac{1}{a}\left[\frac{(r_{max}-b)}{2}\sqrt{(r_{max}-b)^2 + 1} + \frac{1}{2}ln\left(r_{max} - b + \right.\right.$$

$$\left.\left. \sqrt{(r_{max}-b)^2 + 1}\right)\right] \qquad (4)$$

where $r_{max}$ is the radius of the robot body. In our robot, $b$ is much smaller than $\alpha a$, meaning the second term of (2) will be negligible. Eq (4) shows that L grows with the square of $r$, yielding nonlinear length increases per unit increase in diameter. As well, the same formulation given in (4) can be applied in terms of $\alpha$, such that the length of the robot can be controlled in closed loop with a retraction motor encoder.

Retraction, Steering, and SRM Movement.

*Force for Retraction:* Previously analysis has shown that the force required to invert a vine robot is equal to one half the force produced by pressurization plus a zero pressure offset term (a material-dependent constant that represents the force required to invert or evert material, independent of pressure). M. M. Coad, R. P. Thomasson, L. H. Blumenschein, N. S. Usevitch, E. W. Hawkes, and A. M. Okamura, "Retraction of soft growing robots without buckling," IEEE Robotics and Automation Letters, vol. 5, no. 2, pp. 2115-2122, 2020. Present vine robots include an SRM or ARM with mass, and the following expression incorporates the friction between the robot body and the SRM:

$$F_R \leq \frac{PA}{2} + F_1 + F_{fric} \qquad (5)$$

where P is the internal pressure, $A$ the cross sectional area, $F_l$ the material dependent constant, and $F_{fric}$ the friction between the SRM and the robot body. Equation (5) is an inequality due to the fact that friction may or may not be present, depending on the retraction condition (the SRM may not be retracting from the tip, and may not be moving relative to the robot body).

Using (2) and (4) to determine the maximum radius of the spool, $r_{max}$, for a given robot length, (5) can predict the theoretical maximum torque, $\tau_R$, required to retract the robot, which occurs when the spool is at its largest and the SRM or ARM is at the tip. Assuming orthogonality at the point of spooling:

$$\tau_R = r_{max} \times F_R = \left(\frac{1}{2} P_{max}A + \right) r_{max} \quad (6)$$

where $P_{max}$ is the maximum pressure commanded to the robot. This model helps in sizing the reeling motor.

*Limits on Revolute Joint:* For bending of the body the internal restoring moment, $M_{int}$ produced by an inflatable beam under transverse loading is

$$M_{int} = \pi P_{max} r^3 \quad (7)$$

where P is internal pressure and $r$ is the beam radius. The torque requirement for the bending motor is

$$\tau_B \geq M_{int,max} = \pi P_{max} r^3 \quad (8)$$

where $\tau_B$ is the minimum bending motor torque for a maximum operational pressure $P_{max}$. (7) shows that the internal moment is nominally independent of deflection. This implies that so long as the motor torque exceeds the minimum specification given in (8), the revolute joint can achieve any bending angles the geometry of the SRM allows.

*SRM Movement:* When the SRM moves versus remains stationary, the balance of three primary forces determines whether the SRM moves: the tension force on the tail *PA/2*, the inversion/eversion force $F_l$, and the friction force between the SRM and the inside of the body $F_{fric}$. Friction can be reduced with coatings, such as anti-adhesion coatings on the vine robot body, but such coatings are application dependent. The environment that the robot will operate in may not be one suitable for contact with such coatings. The friction force $F_{fric}$ can vary depending on the configuration of the SRM, where a straight SRM will have a lower friction force than a bent one. There are two common ways these forces relate,

$$\frac{PA}{2} > F_{fric} + F_1, or \ \frac{PA}{2} < F_{fric} + F_1 \qquad (9)$$

In the first case, the pressure is relatively high, and the body will evert, pulling the SRM with it. In the second case, the pressure is relatively low, and the SRM will stay in place and can retract the body if the tail is reeled. There is a third, less common case for moderate pressures, in which *PA/2* is within $\pm F_l$ of $F_{fric}$. In this case, retraction of the motor results in motion of the SRM forward, but no retraction of the body.

Example Experimental SRM Vine Robot

An arbitrary length was set to 2.4m. From this, we used (4) to determine that the maximum spool diameter is required to be 42 mm to hold this amount of material. This recognizes that the tail material must fold at least once to fit inside the robot because the half circumference width of a "lay flat" state is wider than the diameter. After including the dimensions of the drivetrain and SRM frame, we found that the minimum robot diameter is 68mm. This in turn allowed us to use (6) to calculate the required reeling motor torque to be 0.30 Nm using the value of $F_{fric}$ reported in Section V-C. We then used (8) to calculate the required steering motor torque to be 0.84 Nm.

More generally, we describe how these parameters scale. First, we note that from (4) we know that the maximum length the robot can achieve grows as the square of the spool radius. Since the spool must fit inside the robot, this also means length grows as the square of robot radius. Next, we note that the required motor torque to retract the robot body grows as the cube of the radius (6), and the motor torque required to steer the body also scales as the cube of radius (8). Since motor torque scales with volume ($\sim r^3$), these three scaling laws suggest that a larger robot will be able to grow proportionally longer, and that the required relative size of the internal motors will remain the same regardless of scale.

The skin was made of a 71 $\mu$m thick silicone-urethane impregnated ripstop nylon fabric (Rockywoods Fabric) tube with an 75 mm diameter, and 2.5 m length. The tube is made by from a strip of fabric using a lap joint, bonded with room temperature vulcanizing silicone adhesive (Smoothon Silpoxy). The 70 mm diameter SRM was made of two 3D printed Markforged Oynx (chopped carbon fiberimpregnated nylon filament) frames connected by an actuated hinge joint. The 150 mm long distal segment contains a reel of up to 3m of vine robot skin and the bending mechanism, while the 80 mm long proximal segment houses the batteries and wireless transmitter; when assembled, the entire SRM is 215mm long. The vine body material reel is a 3mm diameter steel rod mounted to the frame perpendicular to the length of the robot body. Given the required torque, we chose an XYZrobot Smart Servo a1-16 motor with a rated torque of 2.5 Nm; its output drives the reel via a small steel chain. The joint of the robot is rotated by a second, inline XYZrobot Smart Servo a1-16 motor, also rated to 2.5 Nm, and the joint can achieve rotations up to 120° in the positive righthand direction, and 105° in the negative right-hand direction (with the difference due to geometrical constraints imposed by the actuator's construction). The motors are powered by three 500mAh, 3.7V lithium-polymer batteries, controlled by an Adafruit Feather M0 interfaced with 915 MHz radio. When fully assembled SRM has a mass of 337.5g.

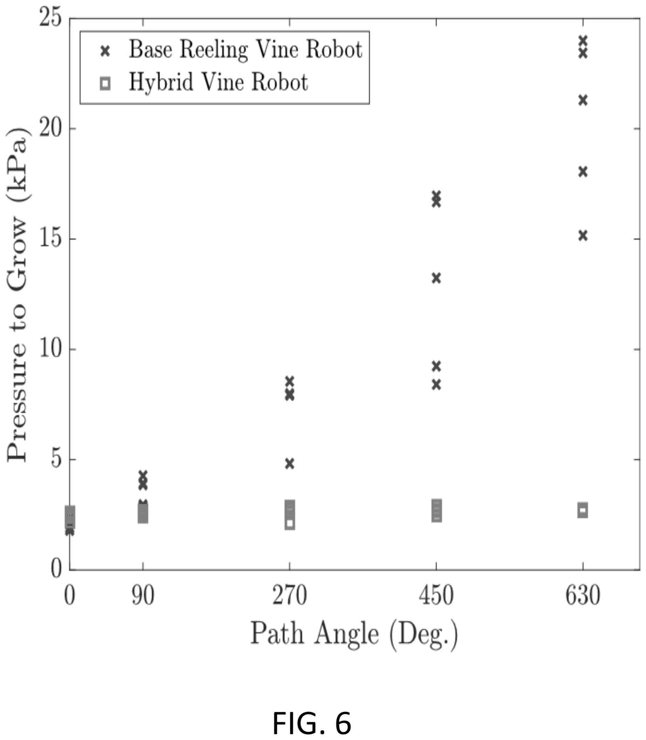

FIG. 6 compares the pressure required for growth through tortuous paths for a standard vine robot with only base reeling and the experimental SRM vine robot. With the body material reeled at the base, as is common in previous vine robots, the pressure to grow increases with path angle. In contrast, for the presented robot with the body material reeled in the SRM, the pressure to grow remains roughly constant when the SRM is near the tip.

Such operation provides advantages. For example, the SRM robots can better navigate difficult archaeology sites, aircraft interiors, or nuclear facilities, when the so long is no gap encountered is smaller diameter than the SRM. Reduced internal friction by tip spooling can enable present SRM and ARM vine robots to access more tortuous and sensitive paths, such as the small intestine, machinery, or animal burrows.

While specific embodiments of the present invention have been shown and described, it should be understood that other modifications, substitutions and alternatives are apparent to one of ordinary skill in the art. Such modifications, substitutions and alternatives can be made without departing from the spirit and scope of the invention, which should be determined from the appended claims.

Various features of the invention are set forth in the appended claims.

**Claims**

1. A soft vine robot comprising a soft vine robot body and a mobile, internal active reeling mechanism or an active steering-reeling mechanism, wherein internal active reeling mechanism and/or active steering-reeling mechanism is within the soft vine robot body.

2. The soft vine robot of claim 1, wherein the active reeling mechanism and/or active steering-reeling mechanism is configured to drive along a tail of the robot body, to control its the length, and to actuate the robot in that position along the tail, which controls direction,

3. The soft vine robot of any previous claim, wherein the active steering-reeling mechanism comprises a bending actuator for steering by bending via a pivot axis between ends of the active steering-reeling mechanism and can acuate steering at any point a length of the robot body.

4. The soft vine robot of any previous claim, comprising a plurality of active steering-reeling mechanisms configured to create a complex turn pattern over the length of the robot body.

5. The soft vine robot of any previous claim, wherein the active reeling mechanism and/or active steering-reeling mechanism comprise motor controllers and wireless communications.

6. The soft vine robot of any previous claim, wherein the active reeling mechanism and/or active steering-reeling mechanism comprise motor controllers and wired communications, and the robot comprises a wired connection extending through a lumen of the robot body.

7. The soft vine robot of any previous claim, wherein the active reeling mechanism and/or an active steering-reeling mechanism comprise an internal battery power source.

8. The soft vine robot of any previous claim comprising a plurality of steering and/or reeling mechanisms and/or a camera at a distal tip of the robot.

9. A method for controlling eversion and inversion of a soft vine robot, the method comprising:
everting a robot body of the robot and activating a mobile, internal active reeling mechanism or an active steering-reeling mechanism within the robot body to assist everting and/or provide active steering of the robot.

126 SRM Tip

Reeling spool

Reeling motor

128 100

108

112

116

120

118

108

104

114

Steering motor

122

110

106

108

121

Electronics housing

**FIG. 1A**

**FIG. 1B**

126 130

100 102

130

**FIG. 1C**

FIG. 2A    FIG. 2B    FIG. 2C    FIG. 2D    FIG. 2E    FIG. 2F    FIG. 2G

EP 4 748 536 A2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63160281

- US 10954789 B, Hawkes

**Non-patent literature cited in the description**

- A dexterous tip-extending robot with variable-length shape-locking. **S. WANG** ; **R. ZHANG** ; **D. A. HAGGERTY** ; **N. D. NACLERIO** ; **E. W. HAWKES**. 2020 IEEE International Conference on Robotics and Automation (ICRA). IEEE, 2020, 9035-9041
- Dynamically reconfigurable discrete distributed stiffness for inflated beam robots. **B. H. DO** ; **V. BANASHEK** ; **A. M. OKAMURA**. 2020 IEEE International Conference on Robotics and Automation (ICRA). IEEE, 2020, 9050-9056
- **W. HAWKES** ; **L. H. BLUMENSCHEIN** ; **J. D. GREER** ; **A. M. OKAMURA**. A soft robot that navigates its environment through growth. *Science Robotics*, 2017, vol. 2 (8), eaan3028

- **Y. SATAKE** ; **A. TAKANISHI** ; **H. ISHII**. Novel growing robot with inflatable structure and heat-welding rotation mechanism. *IEEE/ASME Transactions on Mechatronics*, 2020, vol. 25 (4), 1869-1877
- **M. M. COAD** ; **R. P. THOMASSON** ; **L. H. BLUMENSCHEIN** ; **N. S. USEVITCH** ; **E. W. HAWKES** ; **A. M. OKAMURA**. Retraction of soft growing robots without buckling. *IEEE Robotics and Automation Letters*, 2020, vol. 5 (2), 2115-2122